# EUROPEAN PATENT SPECIFICATION

(11) **EP 1 753 254 B1**
(45) Date of publication and mention of the grant of the patent: **15.04.2015**
(21) Application number: 05107330.2
(22) Date of filing: 09.08.2005
(51) Int. Cl.: H04M 1/60, H04M 1/725, H04W 52/02

(54) **System and method of automatically turning a wireless radio station ON or OFF**
System und Verfahren zum automatischen Ein- oder Ausschalten einer drahtlosen Radiostation
Système et procédé pour la mise en circuit ou hors circuit d'une station radio sans fil

(43) Date of publication of application: 14.02.2007
(73) Proprietor: BlackBerry Limited, Waterloo, ON N2K 0A7 (CA)
(72) Inventor: Estable, Luis, Gatineau, Quebec J9A 3J3 (CA)
(74) Representative: MERH-IP Matias Erny Reichl Hoffmann

(56) References cited:
- EP-A- 1 404 067
- WO-A-02/102019
- FR-A- 2 824 227
- GB-A- 2 397 976
- US-A1- 2002 068 610
- US-A1- 2003 050 103
- US-A1- 2005 070 225
- US-A1- 2005 094 589
- WILLIAMS STEVE: "Bluetooth Specification Version 1.1" BLUETOOTH SPECIFICATION VERSION, no. VERSION 11, 8 May 2001 (2001-05-08), pages 111-122, XP000863817

## Description

This application relates to wireless communication systems and more particularly to wireless radios.

Wireless radios such as PAN (personal area networks) radios and wireless access radios can transmit and receive wireless signals. For example, a cellular phone having a wireless access radio can transmit and receive wireless signals with a wireless access network. Wireless PANs relate to localised communication in a network of at least two PAN devices. Examples of wireless PAN technology include Bluetooth and ZigBee. Wireless radios consume battery power.

GB-A-2397976 discusses a mobile unit with two wireless sections, one for short range communications. US-A-2005/094589 discusses a wireless terminal which can establish links between a cellular network and a short range wirelessly coupled second terminal. EP-A-1404067 discusses a PAN and a method of switching connections between the PAN devices. US-A-2003050103 discusses power management for a wireless device. WO-A-02/102019 discusses a centralized power management arrangement for a wireless network. US-A-2002/0045454 discloses a radio communication destination specifying method in a communication using Bluetooth protocol, in which a headset is turned off if a link establishment fails.

According to one aspect, there is preferably provided a method in a wireless device, the wireless device comprising a PAN (personal area network) radio adapted to communicate with at least one audio peripheral through at least one wireless PAN connection, the method comprising: upon detecting that at least one previously established wireless PAN connection has become non-operational, re-routing communications that were routed through said connection by routing the communications to another preferred PAN peripheral.

In some embodiments, upon detecting that at least one previously established wireless PAN connection has become non-operational, automatically turning off the PAN radio.

According to another aspect, there is preferably provided a method in a wireless device, the wireless device comprising a PAN (personal area network) radio and a wireless access radio, the method comprising: upon detecting that a call has finished on the wireless access radio, automatically turning off the PAN radio.

According to another aspect, there is preferably provided a method in a wireless device, the wireless device comprising a radio adapted to communicate through at least one wireless connection, the wireless device further comprising at least one other connection for communications, the method comprising: upon detecting an event selected from a group of events consisting of: detecting that at least one previously established wireless connection has become non-operational; and detecting that at least one communication has terminated: executing at least one step selected from a group of steps consisting of: automatically turning off the radio; and re-routing communications.

In some embodiments, the radio is preferably selected from a group of radios consisting of: a personal area network (PAN) radio; and a wireless access radio.

In some embodiments, the other connection is preferably selected from a group of connections consisting of: a personal area network (PAN) connection; and a wireless access connection.

In some embodiments, the at least one previously established wireless connection is preferably a wireless connection selected from a group of wireless connections consisting of: the at least one wireless connection; and the at least one other connection.

In some embodiments, the wireless device preferably has a connection to at least one node, the at least one node having a first connection to the wireless device and a second connection to another node; and the at least one previously established wireless connection is the second connection.

In some embodiments, the at least one communication is preferably via a connection selected from a group of connections consisting of: the at least one wireless connection; and the at least one other connection.

In some embodiments, the wireless device preferably has a connection to at least one node, the at least one node having a first connection to the wireless device and a second connection to another node; and the at least one communication is via the second connection.

In some embodiments, re-routing communications preferably comprises routing communications to a preferred peripheral.

In some embodiments, the method preferably further comprises: upon detecting communications: automatically turning on the radio if it is not on; and attempting to establish at least one wireless connection, the at least one wireless connection enabling wireless communication between the wireless device and at least one node.

In some embodiments, the radio preferably stays on for duration of the communications.

In some embodiments, the method preferably further comprises: upon automatically turning off the radio, periodically attempting to re-establish the at least one previously established wireless connection.

According to another aspect, there is preferably provided a wireless device comprising: a radio; and an automatic radio control function adapted to implement the method: upon detecting an event selected from a group of events consisting of: detecting that at least one previously established wireless connection has become non-operational; and detecting that at least one communication has terminated: executing at least one step selected from a group of steps consisting of: automatically turning off the radio; and re-routing communications.

According to another aspect, there is preferably provided a computer readable medium having computer executable instructions stored thereon for execution on a wireless device so as to implement the method: upon detecting an event selected from a group of events consisting of: detecting that at least one previously established wireless connection has become non-operational; and detecting that at least one communication has terminated: executing at least one step selected from a group of steps consisting of: automatically turning off the radio; and re-routing communications.

According to another aspect, there is preferably provided a method in a communications device, the communications device comprising a first connection to a first node and a second connection to a second node, the method comprising: upon detecting an event selected from a group of events consisting of: detecting that the first connection has become non-operational; and detecting that previous communications via the first connection has terminated: informing the second node of the event via the second connection.

According to another aspect, there is preferably provided a communications device comprising: an informing function adapted to implement the method: upon detecting an event selected from a group of events consisting of: detecting that the first connection has become non-operational; and detecting that previous communications via the first connection has terminated: informing the second node of the event via the second connection.

According to another aspect, there is preferably provided a computer readable medium having computer executable instructions stored thereon for execution on a communications device so as to implement the method: upon detecting an event selected from a group of events consisting of: detecting that the first connection has become non-operational; and detecting that previous communications via the first connection has terminated: informing the second node of the event via the second connection.

### Brief Description of the Drawings

Preferred embodiments will now be described with reference to the attached drawings in which:
Figure 1 is a schematic drawing of an example wireless access network coupling many components including an example PAN (personal area network) consisting of a wireless device and a PAN peripheral;
Figure 2 is a flow chart of an example method of automatically turning off a PAN radio in a wireless device;
Figure 3 is a flow chart of another example method of automatically turning off a PAN radio in a wireless device;
Figure 4 is a flow chart of an example method of automatically turning on a PAN radio in a wireless device;
Figure 5 is a flow chart of an example method of selecting between manual control and automatic control of a PAN radio;
Figure 6 is a schematic drawing of an example wireless device adapted to communicate through a wireless connection and some other connection;
Figure 7 is a flow chart of an example method of automatically turning off a wireless radio in a wireless device;
Figure 8 is a flow chart of another example method of automatically turning off a wireless radio in a wireless device; and
Figure 9 is a flow chart of an example method of automatically turning on a wireless radio in a wireless device.

### Description of the Preferred Embodiments

### Example PAN

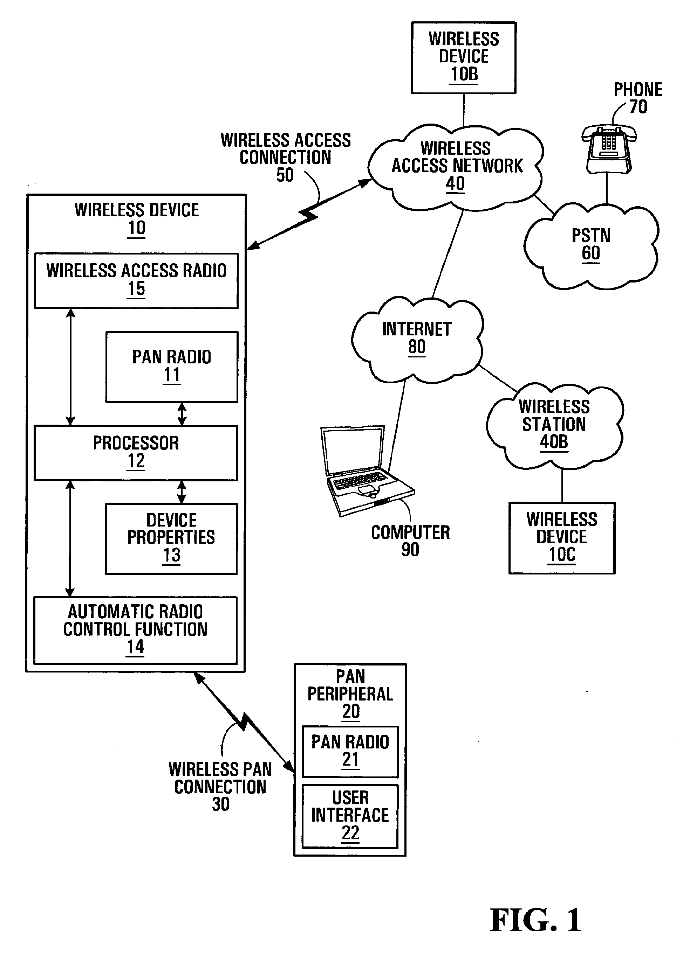

Referring now to Figure 1, shown is a schematic drawing of an example wireless access network coupling many components including an example PAN (personal area network) consisting of a wireless device 10 and an PAN peripheral 20. The wireless device 10 has a processor 12, the processor 12 being coupled to a wireless access radio 15, a PAN radio 11, an automatic radio control function 14, and a plurality of device properties 13. The PAN peripheral 20 has a user interface 22 and a PAN radio 21. The wireless device 10 and the PAN peripheral 20 are coupled together by a wireless PAN connection 30. The wireless device 10 is coupled to a wireless access network 40 through a wireless access connection 50. The wireless communication network 40 may be, for example, a cellular network, a WiFi or 802.11 network, or even another PAN. There are many possible components that may be coupled to the wireless access network 40 for communicating with the example PAN. Figure 1 is a very specific example showing an arbitrary assortment of components, for example a phone 70, a computer 90, a wireless device 10B, and a wireless device 10C. It is possible for other components in varying arrangements to communicate with the example PAN. In the example shown in Figure 1, the phone 70 is coupled to the wireless access network 40 through a PSTN 60 (public switched telephone network); the computer 90 is coupled to the wireless access network 40 through an Internet 80; and the wireless device 10B is coupled to the wireless access network 40 directly while a wireless device 10C is coupled to the wireless access network 40 through a wireless station 40B and the Internet 80. The wireless device 10 shown in Figure 1 is for the purpose of example and explanation only. More generally, embodiments of the application may be implemented in any wireless device having a wireless radio.

In operation, the wireless device 10 is adapted to communicate wirelessly over the wireless communication network 40 using the wireless access radio 15. The PAN radio 11 is adapted to communicate with the PAN peripheral 20 through the wireless PAN connection 30 such that a user may transmit and receive data with the wireless device 10 to and from the PAN peripheral 20. In some embodiments, the wireless PAN connection 30 is established by pairing the wireless device 10 and the PAN peripheral 20. In a broad sense, the wireless PAN connection 30 has two states: operational and non-operational. When the wireless PAN connection 30 is operational, communication is possible between the wireless device 10 and the PAN peripheral 20. The wireless PAN connection 30 is non-operational when communication is not possible between the wireless device 10 and the PAN peripheral 20. The wireless PAN connection 30 is said to be established when it enters the operational state from the non-operational state.

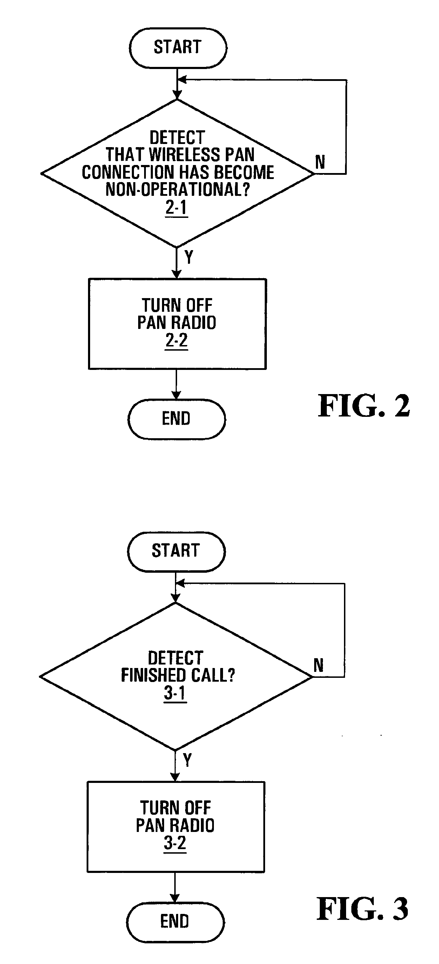

When the wireless PAN connection 30 is operational, the PAN radio 11 consumes power from a power supply (not shown) regardless of whether or not wireless signals are being received or transmitted. The automatic radio control function 14 automatically turns the PAN radio 11 off when it is not needed and automatically turns it back on when it is needed. Preferably, the automatic radio control function 14 is software implemented and is executed by the processor 12. However, more generally, the automatic radio control function 14 may be implemented as software, hardware, firmware, or as any appropriate combination of software, hardware and firmware. Preferably, when executed the automatic radio control function 14 operates to control the PAN radio 11 as a function of whether or not the wireless PAN connection 30 is operational and/or as a function of whether or not there is an active call on the wireless access radio 15. Details of example methods that may be implemented by the automatic radio control function 14 are described later with reference to Figures 2 through 4.

The user interface 22 of the PAN peripheral 20 allows a user to turn the PAN peripheral 20 on and off for example using a button. When the PAN peripheral 20 is turned off, there is no longer a wireless PAN connection 30 between the PAN peripheral 20 and the wireless device 10. In some embodiments, the user interface 22 also allows the user to end calls, control volume, and pair the PAN peripheral 20 with other wireless devices.

There are many possibilities for the PAN peripheral 20. In some embodiments, the PAN peripheral 20 is an audio peripheral, for example, a mobile headset (not shown) or an audio system embedded inside a vehicle (not shown) as to provide a driver of the vehicle hands-free use of the wireless device 10 without wearing a headset. In other embodiments, the PAN peripheral 20 is a heads up display. In further embodiments, the PAN peripheral 20 is an audio/video/multimedia gateway. In yet further embodiments, the PAN peripheral 20 is a keyboard. In still further embodiments, the PAN peripheral 20 is a portable or fixed or wearable computer. In yet other embodiments, the PAN peripheral 20 is a wireless communication device. Many other embodiments are possible and are within the scope of this application.

It is to be understood that the example PAN shown in Figure 1 is a very specific example. Although one PAN peripheral 20 is shown, more generally, a plurality of communication peripherals of varying kinds (not shown) can be coupled to the wireless device 10. There are many ways in which a plurality of communication peripherals can be coupled to the wireless device. In some embodiments, a star network topology is implemented whereby each communication peripheral is coupled to the wireless device 10 through a wireless PAN connection. This implementation is preferred since each audio peripheral has a wireless PAN connection to the wireless device 10. In other embodiments, a ring topology is implemented.

In some embodiments, a network topology is implemented wherein there are PAN peripherals "daisy chained" between the communication peripheral and the wireless device, such as for example, PAN extenders or gateways. For example, an audio headset can be coupled to a computer, which is then coupled to a wireless device. Advantageously, the audio headset may be able to receive VoIP calls via the computer and wireless access calls via the wireless device. If the audio headset is turned off, then the computer could either become a "preferred" peripheral for the wireless device, or alternatively the wireless device could turn off its PAN radio. If the computer is turned off, then the wireless device could either establish a PAN connection with the audio headset directly, or alternatively turn off its PAN radio.

There are many ways that the wireless device can detect that a connection to a communications device daisy chained to the wireless device has become non-operational or that communications via the connection has terminated. In some embodiments, the communications device informs the wireless device that a connection has become non-operational or that communications via the connection has terminated. The communications device may for example have an informing function, a processor, a first connection to some other node, and a second connection to the wireless device. In some embodiments, upon detecting that the first connection has become non-operational or that communications via the first connection has terminated, the communications device informs the wireless device via the second connection. The informing function is preferably software implemented and executed by the processor. However, more generally, the informing function may be implemented as software, hardware, firmware, or as any appropriate combination of software, hardware and firmware.

### Example Wireless Device

Shown in Figure 1 is a wireless device adapted to automatically turn a PAN radio on and off. More generally, any radio can be automatically turned on and off.

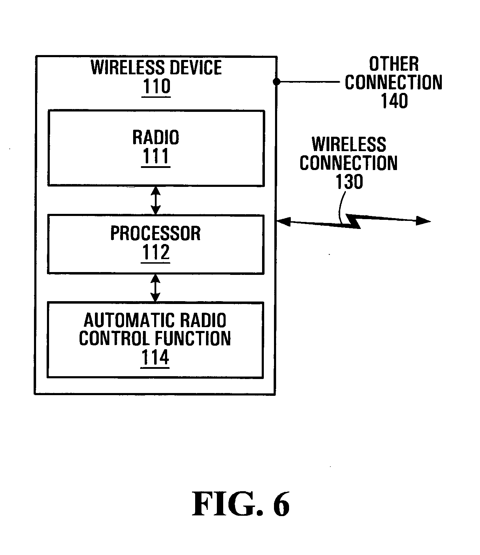

Turning now to Figure 6, shown is a schematic drawing of an example wireless device 110 adapted to communicate through a wireless connection 130 and through some other connection 140. The other connection may be a wireless connection, or it may be a wired connection. Inside the wireless device 110 is a processor 112 coupled to a radio 111 and an automatic radio control function 114.

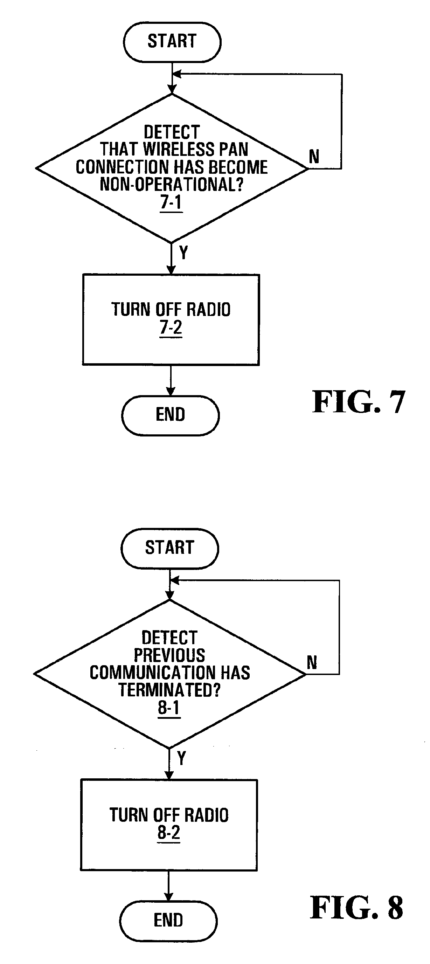

In operation, the wireless device 110 is adapted to communicate wirelessly through the wireless connection 130 using the radio 111. The wireless device 110 is also adapted to communicate through the other connection 140. The automatic radio control function 114 automatically turns the radio 111 off when it is not needed and automatically turns it back on when it is needed. Preferably, the automatic radio control function 114 is software implemented and is executed by the processor 112. However, more generally, the automatic radio control function 114 may be implemented as software, hardware, firmware, or as any appropriate combination of software, hardware and firmware. Preferably, when executed the automatic radio control function 114 operates to control the radio 111 as a function of whether or not the wireless connection 130 is operational and/or as a function of the activity of the other connection 140. Preferably, the automatic radio control function 114 operates with logic that takes into account the function of any peripheral provided to the wireless device. Details of example methods that may be implemented by the automatic radio control function 114 are described later with reference to Figures 7 through 9.

### Automatic turning off method

Turning now to Figure 2, shown is a flow chart of an example method of automatically turning off a PAN radio in a wireless device. This method may be implemented in a wireless device, for example, by the automatic radio control function 14 of the wireless device 10 shown in Figure 1. If the wireless device 10 detects that a wireless PAN connection to an audio peripheral has become non-operational at step 2-1, then the PAN radio 11 is automatically turned off at step 2-2. The wireless PAN connection can become non-operational for several reasons, for example, if the audio peripheral is turned off by a user, if the audio peripheral is out of the communication range, or if the audio peripheral has a weak battery.

In some embodiments, at step 2-2 the PAN radio 11 is turned off immediately upon determining that the wireless PAN connection has become non-operational. Preferably, the PAN radio 11 is turned off after a configurable time duration in order to avoid turning off the PAN radio 11 during an intermittent wireless PAN connection. The wireless PAN connection can be intermittent, for example, if the audio peripheral moves in and out of communication range, if batteries of the wireless device 10 or the audio peripheral are weak, if radio interference is prevalent, or if physical barriers are obstructing the wireless PAN connection.

Typically, the wireless device 10 is paired with a single audio peripheral and a single wireless PAN connection couple the two together. However, if a plurality of audio peripherals is paired with the wireless device 10, then a plurality of wireless PAN connections are present and various alternatives to step 2-1 may be implemented. In one example, the wireless device 10 detects that all wireless PAN connections have become non-operational. In another implementation, the wireless device 10 detects that a single wireless PAN connection associated with a designated audio peripheral has become non-operational. In yet another implementation, the wireless device 10 detects that a select subset of wireless PAN connections associated with a subset of audio peripherals has become non-operational. In some embodiments, multiple of these implementations are provided, and a user is given an opportunity to select between them.

By automatically turning off the PAN radio 11 after detecting that the wireless PAN connection has become non-operational, a user can turn off the PAN radio 11 by turning off the audio peripheral. Ideally, the PAN radio 11 would automatically turn on after the user turns back on the audio peripheral. However, when the PAN radio 11 is turned off, the mobile device 10 has no means to detect when the audio peripheral is turned back on. In some embodiments, the wireless device periodically polls for the audio peripheral. The longer the interval between the polls, the better the battery savings. The shorter the interval is, the more responsive the detection. A parameter could be used for user to adjust the trade-off. Nonetheless, it is preferred that the mobile device 10 turns on the PAN radio 11 after a call is received or placed using the wireless access radio 15.

With reference to Figure 2, an example method has been described in which a wireless device turns off a PAN radio upon detecting that a wireless PAN connection to an audio peripheral has become non-operational. More generally, any radio can be turned off upon detecting that any wireless connection has become non-operational.

Turning now to Figure 7, shown is a flow chart of an example method of automatically turning off a wireless radio in a wireless device. This method may be implemented in a wireless device, for example, by the automatic radio control function 114 of the wireless device 110 shown in Figure 6. If the wireless device 110 detects that a wireless connection has become non-operational at step 7-1, then the radio 111 is automatically turned off at step 7-2.

There are many possibilities for detecting that a wireless connection has become non-operational. In some embodiments, the wireless device detects that the wireless connection 130 has become non-operational. In other embodiments, the wireless device detects that the other connection 140 has become non-operational. In further embodiments, when the wireless device has a connection to at least one node, the at least one node having a first connection to the wireless device and a second connection to another node, the wireless device detects that the second connection has become non-operational.

The method shown in Figure 2 is a particular case of this method; therefore, all previous discussion of possible embodiments are relevant to this method but are not repeated. However, additional embodiments are possible for this method, as implementations of this method are not limited to PAN networks or audio peripherals. For example, the wireless device can turn off the radio upon detecting that a wireless connection to a video peripheral or a camera has become non-operational. There are many possibilities.

In other embodiments, upon detecting that a wireless connection has become non-operational, the wireless device does not turn off the radio and instead communications are routed to a peripheral that has been designated as "preferred". In further embodiments, if the "preferred" peripheral is absent, then the radio is turned off and communications are routed to another integrated function, for example, a speaker/mic, loud audio, or screen.

Turning now to Figure 3, shown is a flow chart of another example method of automatically turning off a PAN radio in a wireless device. This method may be implemented in a wireless device, for example, by the automatic radio control function 14 of the wireless device 10 shown in Figure 1. If the wireless device 10 has detected that the user has finished a call over the wireless access radio 15 at step 3-1, then the PAN radio 11 is automatically turned off at step 3-2.

In some embodiments, at step 3-2 the PAN radio 11 is turned off immediately after the call finishes. In other embodiments, the PAN radio 11 is turned off after a configurable time duration following call completion. Turning the PAN radio 11 off after a configurable time duration may be advantageous, for example, when the user is actively placing and receiving several calls.

With reference to Figure 3, an example method has been described in which a wireless device turns off a PAN radio upon detecting that a call has completed. More generally, any radio can be turned off upon detecting that any previous communication has terminated.

Turning now to Figure 8 is a flow chart of another example method of automatically turning off a wireless radio in a wireless device. This method may be implemented in a wireless device, for example, by the automatic radio control function 114 of the wireless device 110 shown in Figure 6. If the wireless device 110 detects that a previous communication has terminated at step 8-1, then the radio 111 is automatically turned off at step 8-2.

There are many possibilities for detecting that that a previous communication has terminated. In some embodiments, the wireless device detects that the wireless connection 130 has terminated. In other embodiments, the wireless device detects that the other connection 140 has terminated. In further embodiments, when the wireless device has a connection to at least one node, the at least one node having a first connection to the wireless device and a second connection to another node, the wireless device detects that the second connection has terminated.

Since the method shown in Figure 3 is a particular case of this method, all previous discussion of possible embodiments are relevant to this method but are not repeated. However, additional embodiments are possible for this method, as implementations of this method are not limited to voice calls or PAN networks. The wireless device detects when communication has ended and preferably turns off the radio after a communication inactivity timeout period has expired. The communication can be, for example, digital photographs being uploaded by the wireless device from a computer coupled to the wireless device. The communication could also be, for example, video data from a video peripheral. The communication could also be, for example, sending and receiving pictures from a PAN-enabled camera. There are many possibilities.

In other embodiments, upon detecting that previous communication has terminated, the wireless device does not turn off the radio and instead communications are routed to a peripheral that has been designated as "preferred". In further embodiments, if the "preferred" peripheral is absent, then the radio is turned off and communications are routed to another integrated function, for example, a speaker/mic, loud audio, or screen.

Many example methods of automatically turning a radio off have been described. In some embodiments, all methods are implemented in a wireless device. However, it is to be understood that it is not necessary for all methods to be implemented. For example, any one of the methods can be implemented on its own. Preferably, a user can choose which methods are to be enabled.

### Automatic turning on method

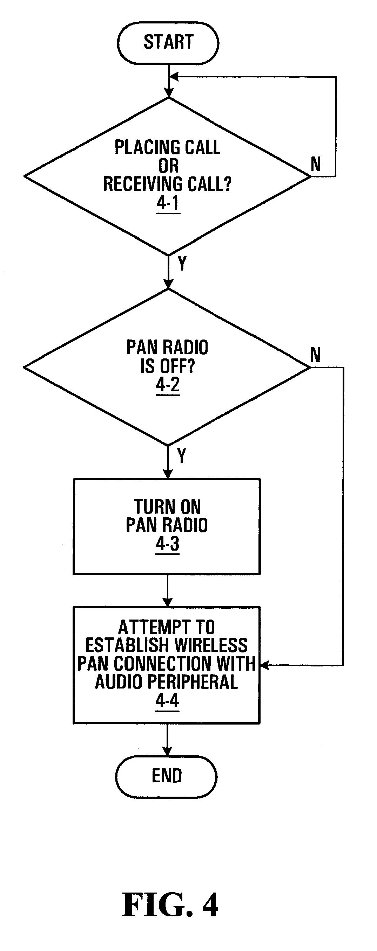

Turning now to Figure 4, shown is a flow chart of an example method of automatically turning on a PAN radio in a wireless device. This method may be implemented in a wireless device, for example, by the automatic radio control function 14 of the wireless device 10 shown in Figure 1. If at step 4-1 a user places a call on the wireless access radio to a second person or receives a call on the wireless access radio from a second person, then at step 4-2 the wireless device 10 determines whether or not the PAN radio 11 is off. If the PAN radio 11 is off, then at step 4-3 the PAN radio 11 is automatically turned on. Once the PAN radio 11 is on, then at step 4-4 the wireless device 10 attempts to establish a wireless PAN connection with an audio peripheral. Preferably, the wireless PAN connection is established before enunciation of the user and the other person. When receiving a call, the PAN radio 11 is preferably on regardless of whether or not the audio peripheral is on. This allows the user to turn on the audio peripheral at any time when receiving the call in order to answer the call.

Typically, the wireless device 10 is paired with a single audio peripheral and a single wireless PAN connection couple the two together. However, if a plurality of audio peripherals is paired with the wireless device 10, then a plurality of wireless PAN connections are present and various alternatives to step 4-4 may be implemented. In one example, the wireless device 10 establishes a wireless PAN connection with each audio peripheral. In another example, the wireless device 10 establishes a single wireless PAN connection associated with a designated audio peripheral. In yet another example, the wireless device 10 establishes a subset of wireless PAN connections associated with a subset of audio peripherals. In some embodiments, multiple of these implementations are provided, and a user is given the opportunity to select between them.

In some embodiments, turning on the PAN radio 11 draws a significant amount of current and may adversely affect functionality of the wireless device 10. In such embodiments, it may be preferred for the wireless device 10 to be equipped with an additional power source (not shown) to help supply power to the PAN radio 11. For example, a supercap can be used to help provide power to the PAN radio 11. When the PAN radio 11 is off, the supercap is preferably being charged in preparation for the next time that the PAN radio 11 is turned on.

With reference to Figure 4, an example method has been described in which a wireless device turns on a PAN radio upon placing a call or receiving a call. More generally, any radio can be turned on upon detecting use of any other connection.

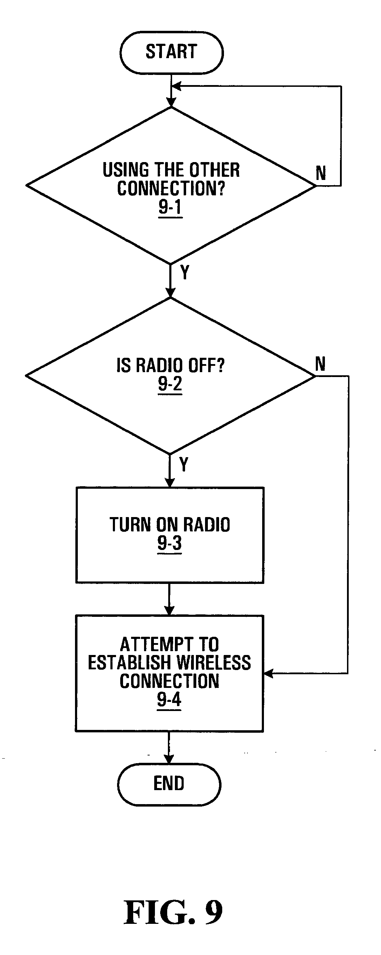

Turning now to Figure 9 is a flow chart of an example method of automatically turning on a wireless radio in a wireless device. This method may be implemented in a wireless device, for example, by the automatic radio control function 114 of the wireless device 110 shown in Figure 6. If at step 9-1 the wireless device 110 detects communication on the other connection 140, then at step 9-2 the wireless device 110 determines whether or not the radio 111 is off. If the radio 111 is off, then at step 9-3 the radio 111 is automatically turned on. Next at step 9-4 the wireless device 110 attempts to establish a wireless connection using the radio 111.

Since the method shown in Figure 4 is a particular case of this method, all previous discussion of possible embodiments are relevant to this method but are not repeated. However, additional embodiments are possible for this method, as implementations of this method are not limited to voice calls or PAN networks.

There are ways in which communication on the other connection 140 can be detected and there are many possibilities for the communication. In some embodiments, the communication is an email sent to a heads up display.

In this particular example, the wireless device detects communication on the other connection 140. In another embodiment, when the wireless device has a connection to at least one node, the at least one node having a first connection to the wireless device and a second connection to another node, the wireless device detects communication on the second connection.

### Example Bluetooth Implementation

Specific example implementation details will now be described for particular embodiments utilizing BT (Bluetooth) technology for wireless communication between the wireless device 10 and the PAN peripheral 20 shown in Figure 1. Although BT is preferred, it is to be understood that other wireless communication protocols may be used and are within the scope of this application. Preferably, the PAN radio 11 inside the wireless device 10 is a BT radio enabling BT communication with the PAN peripheral 20. BT is a master-slave technology, which includes masters and slaves. Slaves can only communicate during timeslots allocated to them and Masters are in charge of timeslot allocation. In some embodiments, the wireless device 10 is a master and the PAN peripheral 20 is a slave. In other embodiments, the wireless device 10 is a slave and the PAN peripheral 20 is a master. BT typically has a communication range of about 10 meters and up to 300 meters]. The communication range can vary depending on several factors such as obstacles, radio interference, and power supply strength.

Example details of pairing the wireless device 10 with the PAN peripheral 20 will now be described for particular embodiments utilizing BT technology. In some embodiments, the device properties 13 for the wireless device 10 include the following:
- Bluetooth Radio:: Enabled | Disabled
- Discoverable:: Enabled | Disabled
- Paired Devices:: {List of Paired Devices}
In this example, the PAN radio 11 is a BT radio and can be turned on or off by either enabling or disabling the "Bluetooth Radio" property. The "Discoverable" property can be set in order to allow the wireless device 10 to be discover by other devices using BT technology such as the PAN peripheral 20. In some embodiments, the user interface 22 of the PAN peripheral 20 is used to enable the audio peripheral to be discovered.

If the wireless device 10 has the "Discoverable" property enabled, and the PAN peripheral 20 has enabled itself to be discovered and is within the communication range, then the wireless device 10 is able to discover the PAN peripheral 20. The PAN peripheral 20 has a BT address that is made available to the wireless device during discovery so that the wireless device 10 can address the PAN peripheral 20 during subsequent communication. Every BT device has a unique Physical or MAC (media access control) address used for BT addressing. In some embodiments, the PAN peripheral 20 must be selected from a list of devices that are within the communication range and available for pairing. In some embodiments, a hard-coded passkey or PIN must be entered into the wireless device 10 in order to finish pairing the wireless device 10 with the PAN peripheral 20. The hard-coded passkey is associated with the PAN peripheral 20 and is used to authenticate the wireless device 10 for BT communication with the PAN peripheral 20. Once the wireless device 10 has been paired with the PAN peripheral 20, then the "Paired Devices" property includes an identification of the PAN peripheral 20, the wireless device stores the BT address of the PAN peripheral 20, and the hard-coded passkey is stored if it was entered. Once paired, the wireless PAN connection 30 is established between the wireless device 10 and the PAN peripheral 20.

The wireless device 10 determines device properties of the PAN peripheral 20 by using the MAC address of the PAN peripheral 20 as a key to a table which includes all the properties for the PAN peripheral 20. The device properties are specific to the PAN peripheral 20. For example, a PAN audio peripheral will have different device properties than a PAN keyboard. The following example device properties are shown for an example in which the PAN peripheral 20 is an audio peripheral:
- Trusted:: Yes | No
- Encryption:: Yes | No
- Services :: {Hands-Free unit | headset}
In this example, the "Trusted" property can be set in order to designate the PAN peripheral 20 as a trusted paired device. If the PAN peripheral 20 is set as a trusted paired device, then the wireless PAN connection 30 can be established automatically without prompting the user. For example, if the wireless PAN connection 30 is lost because a user turned off the PAN peripheral 20, then when the user turns the PAN peripheral 20 back on the wireless PAN connection 30 is established automatically without input from the user. The "Encryption" property can be set in order to encrypt BT communication between the wireless device 10 and the PAN peripheral 20. The "Services" property contains a list of services supported by the PAN peripheral 20. Since the PAN peripheral 20 is an audio peripheral in this example, the services supported are "Hands-Free unit" and "headset".

Preferably, when the PAN peripheral 20 has been designated as a trusted paired device, an additional device property for the PAN peripheral 20 is determined by the wireless device 10:
BT Radio Controller: Enabled | Disabled
Enabling the "BT Radio Controller" property allows the PAN radio 11 to be turned on and off as a function of whether or not the wireless PAN connection 30 is operational and/or as a function of whether or not there is an active call on the wireless access radio 15. This functionality could be implemented, for example, by the automatic radio control function 14 of the wireless device 10.

### Radio Controller

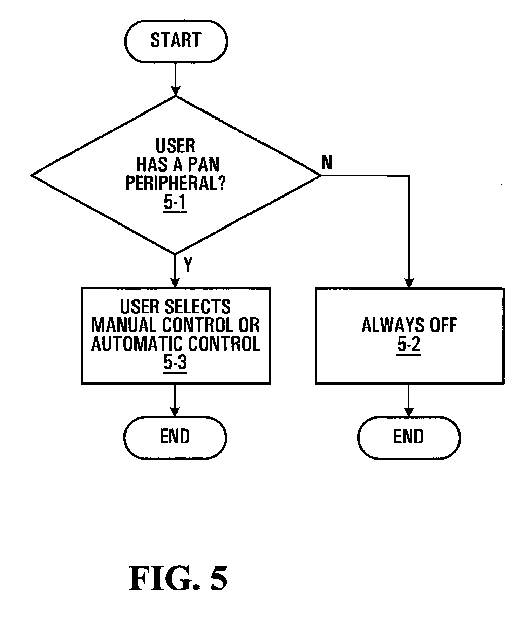

Turning now to Figure 5, shown is a flow chart of an example method of selecting between manual control and automatic control of a PAN radio inside a wireless device. This method may be implemented in a wireless device, for example, the wireless device 10 shown in Figure 1 or the wireless device 110 shown in Figure 6. At step 5-1, the wireless device determines based on user input whether or not the user has a PAN peripheral. If the user does not have a PAN peripheral, then at step 5-2 the PAN radio enters an always-off state. However, if the user does have a PAN peripheral, then at step 5-3 the wireless device determines based on user input whether or not the PAN radio should be manually controlled or automatically controlled.

There are situations in which a user having a PAN peripheral would may prefer to turn the PAN radio on and off manually. For example, if the PAN peripheral is an audio peripheral and the user want to use voice activation features, then the PAN radio 11 must be on as voice activation from an audio peripheral is not possible when the PAN radio is off. Therefore, the user must ensure that the PAN radio is on in order to use voice activation.

On the other hand, there are numerous situations in which a user having a PAN peripheral would prefer that the PAN radio is turned on and off automatically and to benefit from the battery savings that will result from this. For example, if the PAN peripheral is an audio peripheral and the user is not using voice activation features, then the PAN radio can be turned on and off automatically. Advantageously, the user is not burdened with manually controlling the PAN radio.

Although the method shown in Figure 5 has been described for particular embodiments involving control of a PAN radio, more generally, any radio can be controlled. For example, a wireless access radio can be controlled.

### Copyright Notice

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Numerous modifications and variations of the present application are possible in light of the above teachings. It is therefore to be understood that within the scope of the appended claims, the application may be practised otherwise than as specifically described herein.

## Claims

1. A method in a wireless device (10), the wireless device (10) comprising a personal area network 'PAN', radio (11) enabling wireless communications with at least one audio peripheral (20) through at least one wireless PAN connection (30), the method comprising:
upon detecting (2-1) that at least one previously established wireless PAN connection (30) has become non-operational, re-routing communications that were routed through said connection by routing the communications to another preferred PAN peripheral.

2. The method of claim 1 further comprising:
upon detecting (2-1) that at least one previously established wireless PAN connection (30) has become non-operational, automatically turning off (2-2) the PAN radio.

3. The method of claim 2 wherein automatically turning off (2-2) the PAN radio comprises:
automatically turning off (2-2) the PAN radio a preconfigured time duration after detecting (2-1) that the at least one previously established wireless PAN connection (30) has become non-operational.

4. The method of any one of claims 1 to 3 wherein each of the at least one audio peripheral (20) is paired with the wireless device (10) as a trusted pair.

5. The method of any one of claims 1 to 4 wherein detecting (2-1) that at least one previously established wireless PAN connection (30) has become non-operational comprises:
detecting (2-1) that all previously established wireless PAN connections (30) have become non-operational; or
detecting (2-1) that a particular previously established wireless PAN connection (30) has become nonoperational; or
detecting (2-1) that a particular subset of previously established wireless PAN connections (30) has become non-operational.

6. The method of claim 2 or claim 3 further comprising:
upon automatically turning off (2-2) the PAN radio (11), periodically attempting to re-establish the at least one previously established wireless PAN connection (30) with a user configurable time interval between attempts.

7. The method of any one of claims 1 to 6 wherein the wireless device (10) further comprises a wireless access radio (15), the method further comprising:
upon detecting (4-1) an event comprising placing a call on the wireless access radio (15) and/or receiving a call on the wireless access radio (15):
automatically turning on (4-3) the PAN radio (11) if it is not on; and
attempting to establish (4-4) at least one wireless PAN connection (30), the at least one wireless PAN connection (30) enabling wireless communication between the wireless device (10) and at least one audio peripheral (20).

8. The method of claim 7 wherein the PAN radio (11) stays on for a duration of receiving a call.

9. The method of claim 7 or claim 8 wherein attempting to establish (4-4) at least one wireless PAN connection (30) comprises:
attempting to establish (4-4) a wireless connection (30) to each audio peripheral (20); or
attempting to establish (4-4) a wireless connection (30) to a particular audio peripheral (20); or
attempting to establish (4-4) a wireless connection (30) to each of a particular subset of audio peripherals (20).

10. The method of any one of claims 1 to 9 wherein the wireless device (10) comprises a wireless access radio (15), the method further comprising:
upon detecting that a call has finished (3-1) on the wireless access radio (15), automatically turning off (3-2) the PAN radio (11).

11. The method of claim 10 wherein the PAN radio (11) is automatically turned off (3-2) a preconfigured time duration after detecting that the call has finished (3-1) on the wireless access radio (15).

12. The method of any one of claims 1 to 11 wherein the integrated function comprises a speaker/mic, a loud audio, and/or a screen.

13. The method of any one of claims 1 to 12 wherein:
the at least one previously established wireless PAN connection is via the PAN radio (11).

14. The method of any one of claims 1 to 13 wherein:
the wireless device (10) has a connection (30) to at least one node, the at least one node having a first connection to the wireless device (10) and a second connection to another node; and
the at least one previously established wireless PAN connection (30) is the second connection.

15. The method of any one of claims 1 to 14 wherein the PAN radio (11) is a Bluetooth radio.

16. A wireless device (10) comprising:
a personal area network 'PAN' radio (11); and
an automatic radio control function (14) configured to implement the method of any one of claims 1 to 14.

17. The wireless device (10) of claim 16 further comprising a wireless access radio (15).

18. A computer readable medium (14) having computer executable instructions stored thereon for execution on a wireless device (10) so as to implement the method of any one of claims 1 to 15.

19. A wireless communication system comprising a plurality of wireless devices according to claim 16 and/or a plurality of wireless devices according to claim 17.

## Patentansprüche

1. Ein Verfahren einer drahtlosen Vorrichtung (10), wobei die drahtlose Vorrichtung (10) eine PAN(Personal Area Network)-Funkvorrichtung (11) aufweist, die drahtlose Kommunikationen mit zumindest einer Audioperipherievorrichtung (20) über zumindest eine drahtlose PAN-Verbindung (30) ermöglicht, wobei das Verfahren aufweist:
bei einem Erfassen (2-1), dass zumindest eine zuvor hergestellte drahtlose PAN-Verbindung (30) nicht-betriebsfähig geworden ist, Umleiten von Kommunikationen, die über die Verbindung geleitet wurden, durch Leiten der Kommunikationen an eine andere bevorzugte PAN-Peripherievorrichtung.

2. Das Verfahren gemäß Anspruch 1, das weiter aufweist:
bei einem Erfassen (2-1), dass zumindest eine zuvor hergestellte drahtlose PAN-Verbindung (30) nicht-betriebsfähig geworden ist, automatisches Ausschalten (2-2) der PAN-Funkvorrichtung.

3. Das Verfahren gemäß Anspruch 2, wobei das automatische Ausschalten (2-2) der PAN-Funkvorrichtung aufweist:
automatisches Ausschalten (2-2) der PAN-Funkvorrichtung nach einer vorkonfigurierten Zeitdauer nach dem Erfassen (2-1), dass die zumindest eine zuvor hergestellte drahtlose PAN-Verbindung (30) nicht-betriebsfähig geworden ist.

4. Das Verfahren gemäß einem der Ansprüche 1 bis 3, wobei jede der zumindest einen Audioperipherievorrichtung (20) mit der drahtlosen Vorrichtung (10) als ein vertrauenswürdiges Paar paarweise verbunden ist.

5. Das Verfahren gemäß einem der Ansprüche 1 bis 4, wobei das Erfassen (2-1), dass zumindest eine zuvor hergestellte drahtlose PAN-Verbindung (30) nicht-betriebsfähig geworden ist, aufweist:
Erfassen (2-1), dass alle zuvor hergestellten drahtlosen PAN-Verbindungen (30) nicht-betriebsfähig geworden sind; oder
Erfassen (2-1), dass eine bestimmte zuvor hergestellte drahtlose PAN-Verbindung (30) nicht-betriebsfähig geworden ist; oder
Erfassen (2-1), dass ein bestimmter Teilsatz von zuvor hergestellten drahtlosen PAN-Verbindungen (30) nicht-betriebsfähig geworden ist.

6. Das Verfahren gemäß Anspruch 2 oder Anspruch 3, das weiter aufweist:
bei dem automatischen Ausschalten (2-2) der PAN-Funkvorrichtung (11), regelmäßiges Versuchen, die zumindest eine zuvor hergestellte drahtlose PAN-Verbindung (30) wiederherzustellen, mit einem Benutzerkonfigurierbaren Zeitintervall zwischen den Versuchen.

7. Das Verfahren gemäß einem der Ansprüche 1 bis 6, wobei die drahtlose Vorrichtung (10) weiter eine drahtlose Zugangsfunkvorrichtung (15) aufweist, wobei das Verfahren weiter aufweist:
bei einem Erfassen (4-1) eines Ereignisses, das ein Tätigen eines Anrufs auf der drahtlosen Zugangsfunkvorrichtung (15) und/oder ein Empfangen eines Anrufs auf der drahtlosen Zügangsfunkvorrichtung (15) aufweist:
automatisches Einschalten (4-3) der PAN-Funkvorrichtung (11), wenn sie nicht eingeschaltet ist; und
Versuchen eines Herstellens (4-4) zumindest einer drahtlosen PAN-Verbindung (30), wobei die zumindest eine drahtlose PAN-Verbindung (30) eine drahtlose Kommunikation zwischen der drahtlosen Vorrichtung (10) und zumindest einer Audioperipherievorrichtung (20) ermöglicht.

8. Das Verfahren gemäß Anspruch 7, wobei die PAN-Funkvorrichtung (11) für eine Dauer eines Empfangens eines Anrufs eingeschaltet bleibt.

9. Das Verfahren gemäß Anspruch 7 oder Anspruch 8, wobei das Versuchen eines Herstellens (4-4) zumindest einer drahtlosen PAN-Verbindung (30) aufweist:
Versuchen eines Herstellens (4-4) einer drahtlosen Verbindung (30) zu jeder Audioperipherievorrichtung (20); oder
Versuchen eines Herstellens (4-4) einer drahtlosen Verbindung (30) zu einer bestimmten Audioperipherievorrichtung (20); oder
Versuchen eines Herstellens (4-4) einer drahtlosen Verbindung (30) zu jeder eines bestimmten Teilsatzes von Audioperipherievorrichtungen (20).

10. Das Verfahren gemäß einem der Ansprüche 1 bis 9, wobei die drahtlose Vorrichtung (10) eine drahtlose Zugangsfunkvorrichtung (15) aufweist, wobei das Verfahren weiter aufweist:
bei einem Erfassen, dass ein Anruf auf der drahtlosen Zugangsfunkvorrichtung (15) beendet ist (3-1), automatisches Ausschalten (3-2) der PAN-Funkvorrichtung (11).

11. Das Verfahren gemäß Anspruch 10, wobei die PAN-Funkvorrichtung (11) automatisch ausgeschaltet wird (3-2) nach einer vorkonfigurierten Zeitdauer nach dem Erfassen, dass der Anruf auf der drahtlosen Zugangsfunkvorrichtung (15) beendet ist (3-1).

12. Das Verfahren gemäß einem der Ansprüche 1 bis 11, wobei die integrierte Funktion einen Lautsprecher/ein Mikrofon, lautes Audio und/oder einen Bildschirm aufweist.

13. Das Verfahren gemäß einem der Ansprüche 1 bis 12, wobei:
die zumindest eine zuvor hergestellte drahtlose PAN-Verbindung über die PAN-Funkvorrichtung (11) ist.

14. Das Verfahren gemäß einem der Ansprüche 1 bis 13, wobei:
die drahtlose Vorrichtung (10) eine Verbindung (30) mit zumindest einem Knoten hat, wobei der zumindest eine Knoten eine erste Verbindung zu der drahtlosen Vorrichtung (10) und eine zweite Verbindung zu einem weiteren Knoten hat; und
die zumindest eine zuvor hergestellte drahtlose PAN-Verbindung (30) die zweite Verbindung ist.

15. Das Verfahren gemäß einem der Ansprüche 1 bis 14, wobei die PAN-Funkvorrichtung (11) eine Bluetooth-Funkvorrichtung ist.

16. Eine drahtlose Vorrichtung (10), die aufweist:
eine PAN(Persönal Area Network)-Funkvorrichtung (11); und
eine automatische Funksteuerfunktion (14), die konfiguriert ist zum Implementieren des Verfahrens gemäß einem der Ansprüche 1 bis 14.

17. Die drahtlose Vorrichtung (10) gemäß Anspruch 16, die weiter eine drahtlose Zugangsfunkvorrichtung (15) aufweist.

18. Ein computerlesbares Medium (14) mit darauf gespeicherten computerausführbaren Anweisungen zur Ausführung auf einer drahtlosen Vorrichtung (10), um das Verfahren gemäß einem der Ansprüche 1 bis 15 zu implementieren.

19. Ein drahtloses Kommunikationssystem mit einer Vielzahl von drahtlosen Vorrichtungen gemäß Anspruch 16 und/oder einer Vielzahl von drahtlosen Vorrichtungen gemäß Anspruch 17.

## Revendications

1. Procédé dans un dispositif sans fil (10), le dispositif sans fil (10) comprenant un radio de réseau personnel 'PAN' (11) permettant des communications sans fil avec au moins un périphérique audio (20) à travers au moins une connexion PAN sans fil (30), le procédé comprenant :
lors de la détection (2-1) du fait qu'au moins une connexion PAN sans fil préalablement établie (30) est devenue non opérationnelle, le réacheminement des communications qui ont été acheminées à travers ladite connexion en acheminant les communications vers un autre périphérique PAN préféré.

2. Procédé de la revendication 1, comprenant en outre :
lors de la détection (2-1) du fait qu'au moins une connexion PAN sans fil préalablement établie (30) est devenue non opérationnelle, l'arrêt automatique (2-2) de la radio PAN.

3. Procécé de la revendication 2, dans lequel l'arrêt automatique (2-2) de la radio PAN comprend :
l'arrêt automatique (2-2) de la radio PAN pendant une durée préconfigurée après la détection (2-1) du fait que l'au moins une connexion PAN sans fil préalablement établie (30) est devenue non opérationnelle.

4. Procédé de l'une quelconque des revendications 1 à 3, dans lequel chacun de l'au moins un périphérique audio (20) est apparié au dispositif sans fil (10) en tant que paire de confiance.

5. Procédé de l'une quelconque des revendications 1 à 4, dans lequel la détection (2-1) du fait qu'au moins une connexion PAN sans fil préalablement établie (30) est devenue non opérationnelle comprend :
la détection (2-1) du fait que toutes les connexions PAN sans fil préalablement établies (30) sont devenues non opérationnelles ; ou
la détection (2-1) du fait qu'une connexion PAN sans fil préalablement établie particulière (30) est devenue non opérationnelle ; ou
la détection (2-1) du fait qu'un sous-ensemble particulier de connexions PAN sans fil préalablement établies (30) est devenu non opérationnel.

6. Procédé de la revendication 2 ou 3, comprenant en outre :
lors de l'arrêt automatique (2-2) de la radio PAN (11), la tentative périodique de rétablir l'au moins une connexion PAN sans fil préalablement établie (30) avec un intervalle de temps configurable par l'utilisateur entre les tentatives.

7. Procédé de l'une quelconque des revendications 1 à 6, dans lequel le dispositif sans fil (10) comprend en outre une radio d'accès sans fil (15), le procédé comprenant en outre :
lors de la détection (4-1) d'un événement comprenant le fait d'effectuer un appel sur la radio d'accès sans fil (15) et/ou de recevoir un appel sur la radio d'accès sans fil (15) :
la mise en marche automatique (3-4) de la radio PAN (11) si elle n'est pas en marche ; et
la tentative d'établir (4-4) au moins une connexion PAN sans fil (30), l'au moins une connexion PAN sans fil (30) permettant une communication sans fil entre le dispositif sans fil (10) et au moins un périphérique audio (20).

8. Procédé de la revendication 7, dans lequel la radio PAN (11) reste en marche pendant une durée de réception d'un appel.

9. Procédé de la revendication 7 ou 8, dans lequel la tentative d'établir (4-4) au moins une connexion PAN sans fil (30) comprend :
la tentative d'établir (4-4) une connexion sans fil (30) à chaque périphérique audio (20) ; ou
la tentative d'établir (4-4) une connexion sans fil (30) à un périphérique audio particulier (20) ; ou
la tentative d'établir (4-4) une connexion sans fil (30) à chacun d'un sous-ensemble particulier de périphériques audio (20).

10. Procédé de l'une quelconque des revendications 1 à 9, dans lequel le dispositif sans fil (10) comprend une radio d'accès sans fil (15), le procédé comprenant en outre :
lors de la détection du fait qu'un appel est terminé (3-1) sur la radio d'accès sans fil (15), l'arrêt automatique (3-2) de la radio PAN (11).

11. Procédé de revendication 10, dans lequel la radio PAN (11) est arrêtée automatiquement (3-2) pendant une durée préconfigurée après la détection du fait que l'appel est terminé (3-1) sur la radio d'accès sans fil (15).

12. Procédé de l'une quelconque des revendications 1 à 11, dans lequel la fonction intégrée comprend un haut-parleur/microphone, un audio fort, et/ou un écran.

13. Procédé de l'une quelconque des revendications 1 à 12, dans lequel :
l'au moins une connexion PAN sans fil préalablement établie se fait via la radio PAN (11).

14. Procédé de l'une quelconque des revendications 1 à 13, dans lequel :
le dispositif sans fil (10) a une connexion (30) à au moins un noeud, l'au moins un noeud ayant une première connexion au dispositif sans fil (10) et une deuxième connexion à un autre noeud; et
l'au moins une connexion PAN sans fil préalablement établie (30) est la deuxième connexion.

15. Procédé de l'une quelconque des revendications 1 à 14, dans lequel la radio PAN (11) est une radio Bluetooth.

16. Dispositif sans fil (10), comprenant :
une radio de réseau personnel 'PAN' (11) ; et
une fonction de commande radio automatique (14) configurée pour mettre en oeuvre le procédé de l'une quelconque des revendications 1 à 14.

17. Dispositif sans fil (10) de la revendication 16, comprenant en outre une radio d'accès sans fil (15).

18. Support lisible par ordinateur (14) ayant des instructions pouvant être exécutées par ordinateur stockées sur celui-ci pour une exécution sur un dispositif sans fil (10) de manière à mettre en oeuvre le procédé de l'une quelconque des revendications 1 à 15.

19. Système de communication sans fil, comprenant une pluralité de dispositifs sans fil selon la revendication 16 et/ou une pluralité de dispositifs sans fil selon la revendication 17.
